# EUROPÄISCHE PATENTSCHRIFT

(11) **EP 2 155 357 B1**
(45) Veröffentlichungstag und Bekanntmachung des Hinweises auf die Patenterteilung: **18.07.2012**
(21) Anmeldenummer: 08758599.8
(22) Anmeldetag: 16.05.2008
(51) Int. Cl.: B01D 46/00, B01D 29/66, B01D 46/24

(54) **FILTERANORDNUNG**
FILTER ARRANGEMENT
DISPOSITIF DE FILTRATION

(30) Priorität: 23.03.2007 DE 202007004475 U
(43) Veröffentlichungstag der Anmeldung: 24.02.2010
(73) Patentinhaber: Volkmann GmbH, 59494 Soest (DE)
(72) Erfinder: VOLKMANN, Thilo, 59494 Soest (DE)
(74) Vertreter: GROSSE SCHUMACHER KNAUER VON HIRSCHHAUSEN
(86) Internationale Anmeldenummer: PCT/EP2008/003979
(87) Internationale Veröffentlichungsnummer: WO 2008/116672

(56) Entgegenhaltungen:
- EP-A- 0 601 733
- DE-A1- 4 201 041
- DE-A1-102004 005 211
- DE-U- 1 851 221
- FR-A- 2 791 579
- US-A- 4 073 632
- US-A- 4 138 234
- US-A1- 2004 237 483
- US-B1- 6 258 145

## Beschreibung

### GEBIET DER ERFINDUNG

Die Erfindung betrifft Filteranordnungen gemäß dem Oberbegriff von Anspruch 1, also solchen, bei denen ein plattenförmiger Filterhalter mindestens eine halsförmige Ausstülpung unter Freilassen von jeweils einer Durchgangsöffnung aufweist, der eine Filterkerze zugeordnet ist

### TECHNOLOGISCHER HINTERGRUND

Filterelemente, die als Baueinheiten in einer dem Bedarf entsprechenden Anzahl in einer Filteranordnung zusammengebaut oder eingebaut werden können, werden üblicherweise an einem plattenförmigen Filterhalter dichtend festgeschraubt, wie z.B. gemäß DE 203 12 074 U1, Fig. 1.

Ein typischer Anwendungsfall für gattungsgemäße Filteranordnungen sind so genannte Vakuumförderanlagen, wie sie aus der DE 203 12 074 U1 bekannt sind und die einen Sammelbehälter für unter Vakuum angesaugtes Fördergut aufweisen. An dem Sammelbehälter steht der Unterdruck einer Vakuumpumpe an und das Fördergut setzt sich unter Schwerkraft am Sammelbehälterboden ab, während die Saugluft durch die Durchgangsöffnungen des plattenförmigen Filterhalters den Sammelbehälter oben verlässt. Schon zum Schutz der Vakuumpumpe und zur vollständigen Nutzung des Fördergutes werden durch die die Durchgangsöffnungen verschließenden Filterelemente nur die Saugluft, nicht aber das Fördergut oder Staubbestandteile zur Vakuumpumpe hindurchgelassen. Derartige Filterelemente, die aus Keramik, Fließmaterial oder anderem Filterflächenmaterial bestehen können, weisen in der Regel eine Kerzenform (hängende Filterkerzen) auf. Wenn eine Filterkerze trotz regelmäßiger Gegendruckreinigung sich in ihrer Leistung verschlechtert oder Risse erhält und sie ausgetauscht werden muss, ist der Aufwand vergleichsweise groß.

Bei Filterschläuchen in Feinstaubfiltem werden üblicherweise die rohgasseitigen Schlauchmündungen zwischen konischen Ringen verklemmt und der Außenring mit dem plattenförmigen, mit Durchgangsöffnungen versehenen Filterhalter verschraubt (DE 41 34 679 A1). Der äußere Haltering kann am Durchbrechungsrand auch verschweißt oder mit dem Filterhalter einteilig ausgestaltet sein (DE 40 31 375 A1). Die Filterschläuche können durch Entfernen eines Innenkonus an ihrer Gaseintrittsmündung gewechselt werden, wobei die Schlauchmündung einen wulstartigen Klemmrand aufweisen kann (DE 816 852 C).

Es sind auch Filteranordnungen mit mit den Filterelementen verbundenen Adaptionskragen bekannt. So beschreibt die DE 203 12 074 U1 einen zweiteiligen Adaptionskragen (Figuren 1 und 2), der mittels einer flanschartigen auskragenden Befestigungshülse mit Außengewinde und unter Zwischenlage einer Ringdichtung mit einer ebenen gelochten Filterhalteplatte verschraubt wird, so dass die Befestigungsshülse und der Adapterkragen den ebenen Filterhalter auf gegenüberliegenden Seiten zwischen sich einklemmen. Die Handhabung derartiger Filteranordnungen beim Filterwechsel bedarf einer gewissen Geschicklichkeit, damit auch die gewünschte Dauer-Dichtigkeit wieder erreicht wird. Statt einer Schraubverbindung sieht die DE 90 14 198 U1 reingasseitig auf einen Adapterflansch des Filterelementes einwirkende Fixierstifte vor. Zu deren Festlegung ist es erforderlich, einen ringförmigen Befestigungskragen für die Fixierstifte mit erheblichem radialen Abstand von der Durchlochung der ebenen Filterhalterplatte mit Letzterer zu verschweißen. Nur so kann das mit seinem Adapterflansch einteilig versehene kerzenförmige Filterelement von der Reingasseite her unter Zwischenlage eines Dichtungskragens in den Befestigungskragen eingeschoben und reingasseitig auf den plattenförmigen Filterhalter aufgesetzt werden kann. Das Einschieben der Filterkerze von oben ist bei vielen Anwendungen hinderlich und für die Dichtfunktion wegen des von unten anstehenden Rohgasdruckes ungünstig.

Gattungsgemäße Filteranordnungen, von denen die Erfindung also ausgeht, weisen mindestens eine halsförmige Ausstülpung des plattenförmigen Filterhalters auf. Sie sind u.a. aus der US 3 997 305 bekannt. Gemäß dieser wird ein Aufspreizkorb mit einem um dessen Öffnungsrand umgelegten Filterschlauch über die halsförmige Ausstülpung geschoben und durch einen äußeren Spannring dichtend an den äußeren Rand der halsförmigen Ausstülpung herangezogen. Zur Aufnahme venturiartiger Düsen im Schlauchinneren wird ein im Durchmesser gestuftes Rohrstück in die halsförmige Ausstülpung eingeschoben und an ihr festgeschweißt. Eine weitere gattungsgemäße Schlauchfilteranordnung ist aus der DE 203 12 074 U1, Fig. 4B bekannt. In beiden bekannten Anwendungsfällen von plattenförmigen Filterhaltem mit halsförmigen, eine Durchgangsöffnung bildenden Ausstülpungen, von denen die Erfindung ausgeht, werden keine besonderen Dichtanordnungen verwendet. Vielmehr soll sich der Filterschlauch dichtend am Außenumfang der halsförmigen Ausstülpung unter dem radialen Druck eines Spannmittels anlegen. Gemäß der DE 203 12 074 U1 dient die halsförmige Ausstülpung außerdem als Schweißkragen zur dauerhaften Befestigung einer nicht austauschbaren Filterkerze mit Stützfunktion für den Filterschlauch. Die gattungsgemäßen Filteranordnungen sind zwar einfach herstellbar sowie strömungsgünstig, doch stellt sich die klemmende Befestigung des übergestülpten Filterschlauches als zeitaufwendig dar. Auch sind derartige Filteranordnungen für fertige Filterelemente, bestehend aus einer Filterkerze mit vorkonfektioniertem Adaptionskragen, bisher ungeeignet.

Aus der EP 0 601 733 A1 ist eine Filteranordnung für keramische Filterkerzen bekannt, welche von der Rohgasseite her von radial außen auf eine Ausstülpung einer Filterplatte unter Zwischenfügung einer Dichtanordnung aufsteckbar ist. Zur Positionssicherung der keramischen Filterkerze sind Vorkehrungen im Rohgasraum erforderlich, wie eine Stützanordnung für den Filterkerzenboden oder eine Stützplatte für das kragenförmige Anschlusselement zur Befestigung unterhalb des Filterhalters. Derartige Anordnungen sind sowohl in dichtungstechnischer als auch in hygienischer Hinsicht problematisch.

Eine Filteranordnung, bei der ein im wesentlichen zylinderförmiges Filterelement respektive dessen ebenfalls im Wesentlichen zylinderförmiger Adapterkragen von der Reingasseite her in die Anordnung einsteckbar ist, kann der US 4,138,234 A entnommen werden. Problematisch an der dort beschriebenen Filteranordnung ist, dass sich das Filterelement beispielsweise bei lockerem Verschluss derart lösen kann, dass es aus der Anordnung herausfällt.

### DARSTELLUNG DER ERFINDUNG

Der Erfindung liegt die Aufgabe zugrunde, den Filterwechsel bei einer Filteranordnung der gattungsgemäßen Art bei ausreichender Filtersicherheit einfach zu gestalten.

Zur Lösung dieser Aufgabe wird eine Filteranordnung mit den Merkmalen des Anspruchs 1 vorgeschlagen. Gemäßder Erfindung ist insbesondere vorgesehen, dass bei einer αattungsgemäßen Filteranordnung jedes Filterelement mit einem Adapterkrager versehen ist und der Adapterkragen mindestens einen mit der Ausstülpung ausstülpungsparallelen ersten Schenkel aufweist, wobei dieser Schenkel von der Rohgasseite her in (die Ausstülpung steckbar ist und dass eine Dichtanordnung vorgesehen ist, die sowohl plattenparallele als auch ausstülpungsparallele Dichtelemente zum zumindest teilweisen Einfügen zwischen den Bereichen der Ausstülpung und Bereichen des Adapterkragens aufweist. Zusätzlich kann ein über die Ausstülpung steckbacer ausstülpungsparalleles Schenkel des Adapterkragens vorgesehen sein. Der zum Filderhaltder plattenparallele Schenkel überragt den ausstülpungsparallelen Schenkel radial.

Auf diese Weise ist der Adapterkragen von der Rohgasseite her in die halsförmige Ausstülpung des plattenförmigen Filterhalters radial dichtend einsteckbar oder über sie überstülpbar, bis ein plattenparalleler Bereich des Adapterkragens radial außerhalb der Ausstülpung des Filterhalters gegen die Rohgasseite des Filterhalters dichtend zur Anlage kommt. Dies kann in einer Weise geschehen, in der die Dichtanordnung an dem Adapterkragen bereits angelegt ist und somit gemeinsam mit dem Adapterkragen in oder über die halsförmige Ausstülpung des plattenförmigen Filterhalters ein- bzw. übergeschoben wird.

Zur Sicherung des Filterelementes am plattenförmigen Filterhalter kann bereits der Reibwiderstand der Dichtanordnung an der halsförmigen Ausstülpung ausreichen, wobei ein an dem Filterelement anstehender Saugdruck die Dichtwirkung verstärkt.-Erfindungsgemäß ist eine Schnellverschlusssicherung an dem Adapterkragen vorgesehen. Die Schnellverschlusssicherung greift an der dem Filterelement gegenüberliegenden Seite des Filterhalters an. Bevorzugt lässt sich die Schnellverschlusssicherung durch einfaches Umlegen eines Sicherungsbügels so an der Rückseite des plattenförmigen Filterhalters anlegen, so dass der Adapterkragen dadurch in Sollposition gehalten wird. Selbst wenn diese Schnellverschlusssicherung versagt, sich z.B. öffnet, kann sie sicherstellen, dass das Filterelement an einem völligen Herausrutschen aus dem ausstülpungsparallelen Dichtungsbereich gehindert wird und somit eine Notsicherheit an Dichtwirkung erhalten bleibt.

Ein weiterer Aspekt ist die Hygiene, welche dadurch gesichert wird, dass das plattenparallele Dichtungselement die Verbindungs- und Dichtungsanordnung vor schädlicher Nesterbildung schützt.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - Ausführungsbeispiele einer Filteranordnung dargestellt sind.

In der Zeichnung zeigen
- Fig. 1: einen Axialschnitt durch eine erfindungsgemäße Filteranordnung;
- Fig. 2: eine alternative Ausführungsform der Filteranordnung nach Figur 1 in zwei verschiedenen Versionen;
- Fig. 3: von der Filteranordnung nach Fig. 1 eine Draufsicht von oben;
- Fig. 4A-C: von alternativen Filteranordnungen verschiedene Ausgestaltungen der halsförmigen Ausstülpung und Dichtung im Axialschnitt - ausschnittsweise.

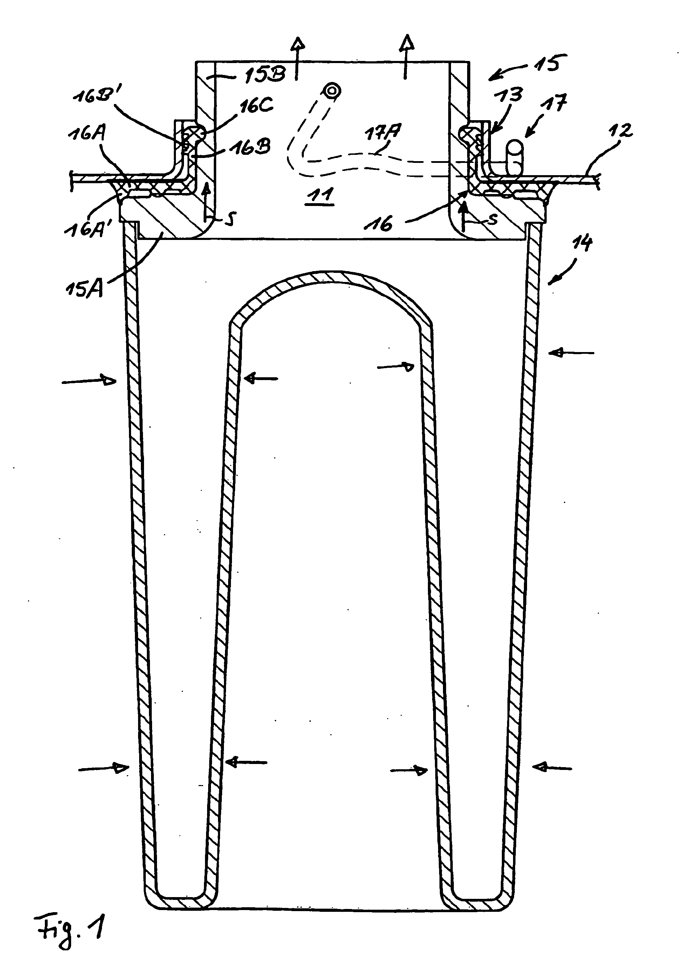

Die aus Figur 1 ersichtliche Filteranordnung weist einen plattenförmigen Filterhalter 12 auf, dessen Größe beliebig sein kann und der mindestens eine Durchgangsöffnung 11 besitzt, deren Rand von einer halsförmigen Ausstülpung 13 gebildet wird, die in dem dargestellten Ausführungsbeispiel als angeformter, nach oben erstreckter, im wesentlichen zylindrischer Kragen ausgebildet ist. Andere Kragenformen und auch mehrteilige Ausführungen von Ausstülpung und Filterhalter, die z.B. miteinander verschweißt sein können, sind im Rahmen der Erfindung praktisch ohne Einschränkung möglich.

Ein Filterelement 14 geeigneter Materialart und Formgebung ist mit einem Adapterkragen 15 an seinem Mündungsrand dichtend verbunden. Der Adapterkragen 15 weist in dem dargestellten Ausführungsbeispiel - im Querschnitt gesehen - zwei Schenkel auf, und zwar einen plattenparallelen Schenkel 15A und einen ausstülpungsparallelen Schenkel 15B. Beide Schenkel sind in dem dargestellten Ausführungsbeispiel Bereiche eines einstückigen Bauteils. Aus mehreren Elementen, wie zunächst getrennten Schenkeln zusammengesetzte Adapterkragen sind ebenso verwendbar. Der Querschnitt des ausstülpungsparallelen Schenkels 15B ist auf seiner Außenseite hinreichend kleiner als der lichte Querschnitt der Ausstülpung 13 des Filterhalters 12, so dass der Adapterkragen 15 mit peripherem Spiel in die Ausstülpung 13 eingesteckt werden kann. Der Zwischenraum wird überbrückt durch eine Dichtungsanordnung 16, die ein plattenparalleles Dichtungselement 16A und ein ausstülpungsparalleles Dichtungselement 16B aufweist. In dem dargestellten Ausführungsbeispiel ist die Dichtungsanordnung 16 einteilig. Sie besitzt an ihrem plattenparallelem Schenkel 16A auf der Seite des Adapterkragens 15 umlaufend durchgehende Dichtlippen 16A' und im Bereich der radialen Außenseite des ausstülpungsparallelen Schenkels 16B umlaufend durchgehende Dichtlippen 16B', die im Gebrauchszustand im Innenumfang der Ausstülpung 13 dichtend zur Anlage kommen. Ein oder mehrere umlaufender oder kürzere wulstartige Vorsprünge 16C der Dichtanordnung 16 können mit geeigneten Aussparungen an der Peripherie des ausstülpungsparallelen Schenkels 15B des Adapterkragens 15 korrespondieren, sodass die Dichtungsanordnung in eine vorgeschriebene Position auf den Adapterkragen 15 geschoben werden kann, bevor das Filterelement 14 mit seinem Adapterkragen 15 in die Ausstülpung 13 eingeschoben wird.

Eine Schnellverschließsicherung 17 in Gestalt eines federnden Sicherheitsbügels 17A ist in entsprechende Aussparungen - wie Durchbohrungen, des ausstülpungsparallelen Schenkels 15B des Adapterkragens 15 schwenkbar einhängbar und so geformt, dass der Sicherungsbügel 17A an der Rückseite des Filterhalters 12 derart zur Anlage bringbar ist, dass dadurch das Filterelement 14 unter Betriebsbedingungen sicher an dem Filterhalter 12 in Anlage gehalten wird. Selbst wenn diese Schnellverschlusssicherung versagt, sich z.B. öffnet, kann sie sicherstellen, dass das Filterelement an einem völligen Herausrutschen aus dem ausstülpungsparallelen Dichtungsbereich gehindert wird und somit zumindest radial wirkende eine Notsicherheit an Dichtwirkung erhalten bleibt. Das kann z.B. durch entsprechend große Dimensionierung des Einhägebereiches des Sicherungsbügels erreicht werden.

Gemäß einer weiteren Ausführungsform der Erfindung, die auch von eigenständiger erfinderischer Bedeutung ist, kann auf der vom Filterelement abgewandten Rückseite des Filterhalters ein in der Zeichnung nicht dargestellter Speicher oder Fluidbehandlungselement, z.B. für Reinigungszwecke, dem Adapterkragen (15) zugeordnet sein. Dieses Element kann der Auslassmündung des ausstülpungsparallelen Schenkels (15B) insbesondere mit achsialem und/oder radialem Abstand unter Freilassung mindestens eines Fluiddurchtritts, nachgeordnet sein und sich am Adapterkragen (15), an dem Filterhalter (12) und/oder an einer Verschließsicherung (15C, 17) abstützen. Als Halteelement für das Speicher- oder Fluidbehandlungselement kann ein Abstandshalter mit Doppelfunktion dienen, der auch die Schließposition der Verschließsicherung fixieren kann. Das Halteelement kann als ein mit der Verschließsicherung zusammenwirkender Bajonettverschluss ausgestaltet sein.

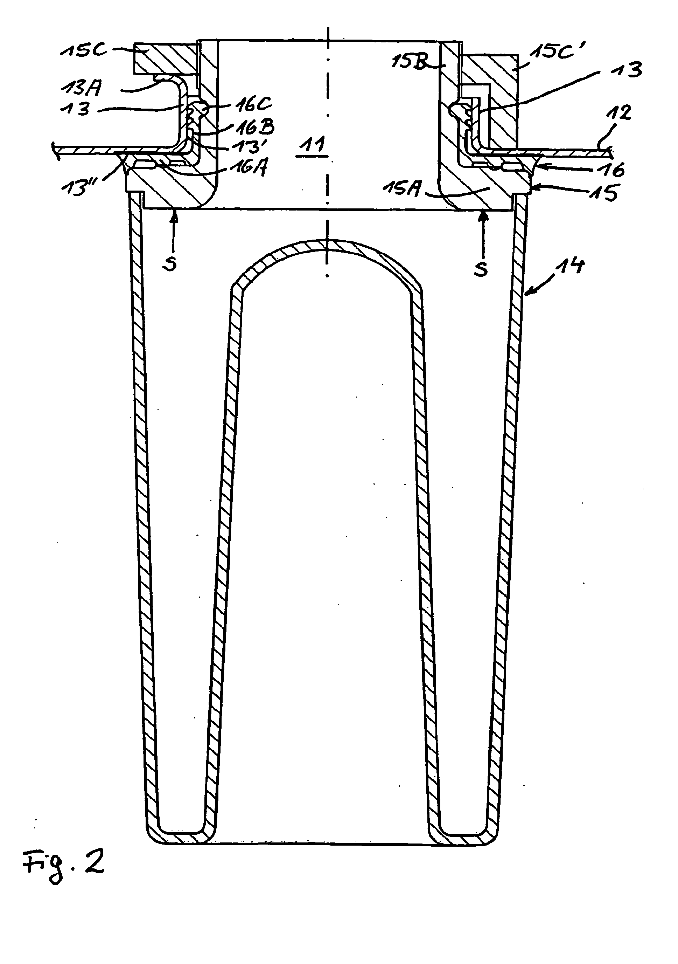

Bei dem Ausführungsbeispiel nach Figur 2 wird anstelle einer Bügelsicherung eine Schraubsicherung verwendet, wobei in der linken Bildhälfte eine Schraubmutter 15B sich gegen eine Umbördelung 13A der Ausstülpung 13 anlegt, während in der rechen Bildhälfte die Schraubmutter 15C' als Überwurfmutter ausgebildet ist und sich auf der Rückseite des Filterhalters 12 abstützt. Im Übrigen entsprechen Aufbau und Funktion dieses Ausführungsbeispiels dem nach Figur 1.

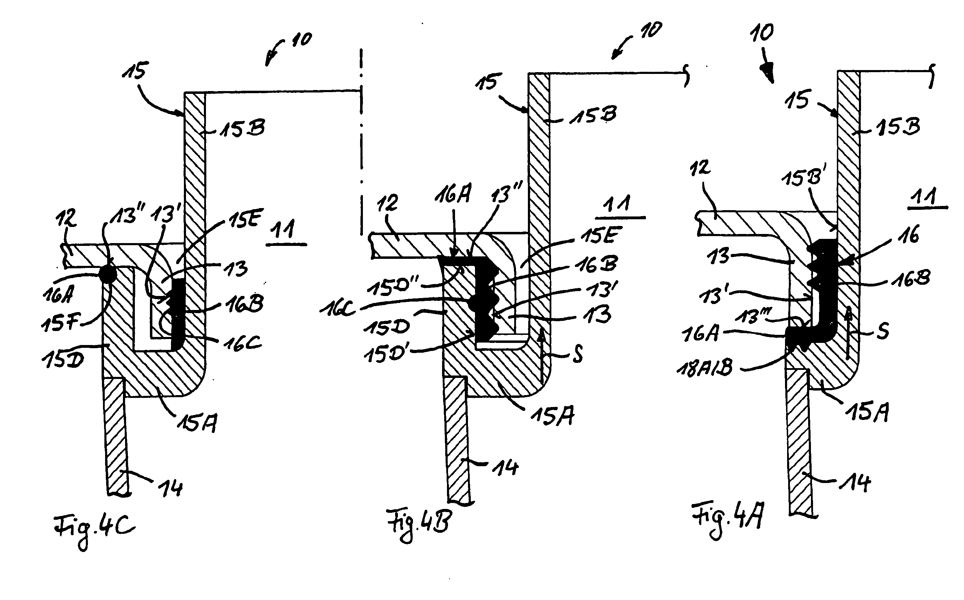

Die Ausführungsformen nach Figuren 4A bis 4C verdeutlichen weitere Möglichkeiten, eine Ausstülpung 13, einen Adapterkragen 15 und eine Dichtanordnung 16 auszubilden. Allen Ausführungsbeispielen 4A bis 4C ist gemeinsam, dass die Ausstülpung 13 in diesem Fall nach innen, d.h. zum Filterelement 14 hin gerichtet ist.

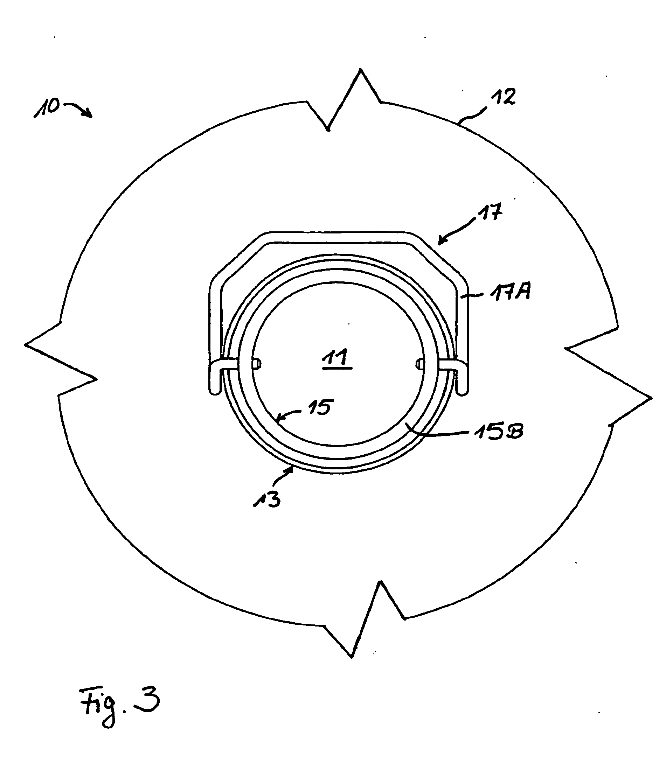

Gemäß Fig. 4A ist der Adapterkragen 15, wie bei dem Ausführungsbeispiel nach Figuren 1 bis 3, zweischenklig und aus einem Stück gefertigt, wobei sich der plattenparallele Schenkel 15A gegen die Stimkante der Ausstülpung 13 unter Zwischenlage der einstückigen, zweischenkligen Dichtanordnung 16 abstützt. Eine Vemutung und Verrippung 18A/18B zwischen den plattenparallelen Schenkeln der Dichtungsanordnung und des Adapterkragens verbessert die axiale Dichtwirkung trotz kleiner Gesamtdimensionierung.

Bei dem Ausführungsbeispiel nach Fig. 4B weist der Adapterkragen 15 einen ausstülpungsparallelen Dichtschenkel 15D auf, der eine ausstülpungsparallele 15D'und eine plattenparallele 15D" Schenkelfläche besitzt. Der Dichtschenkel 15D wird von außen über die Ausstülpung 13 des Filterhalters 12 von unten her geschoben, wobei die radiale Außenseite der Ausstülpung 13 und der sich daran anschließende plattenparallele Flächenbereich auf der Unterseite des Filterhalters 12 als Dichtflächen 13' und 13" dienen. Die Ausstülpung 13 greift also vorteilhaft in eine umlaufende, an dem Adapterkragen 15 vorgesehene Rinne 15E ein. Die Dichtungsanordnung 16 ist im Übrigen in gleicher funktioneller Weise wie bei dem Ausführungsbeispiel nach Figuren 1 bis 3 ausgebildet, wie aus Figur 4B leicht ersichtlich.

Bei dem Ausführungsbeispiel nach Figur 4C entspricht der Aufbau des Adapterkragens 15 im Wesentlichen dem Adapterkragen 15 gemäß Figur 4B, wobei allerdings beide Ausstülpungsparallelen Schenkel 15B und 15D des Adapterkragens 15 Dichtfunktionen übemehmen. In diesem Ausführungsbeispiel ist die Dichtungsanordnung 16 zweiteilig und besteht aus einem ausstülpungsparallelen Dichtungselement 16B, dass sich zwischen der radialen Außenfläche des radial inneren ausstülpungsparallelen Schenkels 15B des Adapterkragens 15 einerseits und der radialen Innenfläche 13" der Ausstülpung 13 andererseits erstreckt. Ein plattenparalleles Dichtungselement 16A ist eigenständig und ähnlich einer O-Ringdichtung ausgebildet und angeordnet. Hierzu weist der Mündungsrand des ausstülpungsparallelen Schenkels 15D des Adapterkragens 15 eine geeignete Aufnahmeaussparung 15F auf.

Ein weiterer Aspekt ist die Hygiene, welche dadurch gesichert wird, dass das plattenparallele Dichtungselement, insbesondere an seiner radialen Außenseite, die Verbindungs- und Dichtungsanordnung vor schädlicher Nesterbildung schützt. Insgesamt lässt sich durch die Erfindung eine an Spalten und Absätzen arme oder spalt- und absatzfreie Ordnung im Dichtungsbereich zwischen dem Filterhafter und dem Filterelement erreichen, so dass vor allem hygienischen Gesichtspunkten, wie sie bei z.B. pharmazeutischen Produkten eine besondere Rolle spielen, in besonders vorteilhafter Weise Rechnung getragen wird.

### BEZUGSZEICHENLISTE

- 10: Filteranordnung
- 11: Durchgangsöffnung
- 12: Filterhalter
- 13: Ausstülpung
- 13': Dichtfläche
- 13": Dichtfläche
- 13'": Dichtfläche
- 13A: Umbördelung
- 14: Filterelement
- 15: Adapterkragen
- 15A: plattenparalleler Schenkel
- 15B: ausstülpungsparalleler Schenkel
- 15B': ausstülpungsparallele Schenkelfläche
- 15C: Schraubmutter
- 15C': Schraubmutter
- 15D: Dichtschenkel

- 15D': ausstülpungsparallele Schenkelfäche
- 15D": plattenparallele Schenkelfläche
- 15E: Rinne
- 15F: Aufnahmeaussparung
- 16: Dichtanordnung
- 16A: Dichtungselement
- 16A': Dichtlippe
- 16B: Dichtungselement
- 16B': Dichtlippe
- 16C: Vorsprung
- 17: Schnellverschlusssicherung
- 17A: Sicherungsbügel
- 18A/B: Vemutung/Verrippung

- S: Steckrichtung

## Patentansprüche

1. Filteranordnung zumindest umfassend
einen plattenförmigen, mindestens eine halsförmige Ausstülpung (13) mit einer Durchgangsöffnung (11) aufweisenden Fifterhalter (12) zur dichtenden Aufnahme eines ein kragenförmiges Anschlusselement aufweisenden Filterelementes (14) je Ausstülpung von der Rohgasseite des Filterhalters her,
eine Dichtanordnung (16), die sowohl zum Filterhalter parallele als auch ausstülpungsparallele Dichtelemente (16A, 16B) zum zumindest teilweisen Einfügen zwischen der Ausstülpung (13) und dem kragenförmigen Anschlusselement des Filterhalters (12) aufweist,
je Filterelement (14) einen Adapterkragen (15) als kragenföfmiges Anschlusselement mit mindestens einem mit der Ausstülpung (13) ausstülpungsparallelen Schenkel (15B), der von der Rohgasseite her radial innen in die Ausstülpung (13) steckbar ist, und mit mindestens einem zum Fitterhalter (12) plattenparallelen Schenkel (15A), der den ausmülpungsparallelen Schenkel (15B) auf der Rohgasseite radial überragt, sowie
eine als Schnellverschlussicherung gebildete Verschließsicherung (17) des Adapterkragens (15) bezüglich des Filterhalters (12), durch die das Filterelement an einem völligen Herausrutschen aus dem ausstülpungsparallelen Dichtungsbereich gehindert wird, und die an dem ausstütpungsparallelen Schenkel (15B) des Adapterkragens (15) sowie an der dem Filterelement (14) gegenüberliegenden Seite des Filterhatters (12) an dem Filterhalter angreift.

2. Filteranordnung nach Anspruch 1, **dadurch gekennzeichnet, dass** die Schnellverschlusssicherung (17) einen schwenkbaren Sicherungsbügel (17A) aufweist.

3. Filteranordnung nach Anspruch 2, **dadurch gekennzeichnet, dass** die Schnellverschlusssicherung (17) bei nicht verriegeltem Sicherungsbügel (17A) den Adapterkragen (15) des Filterelementes an einem völligen Herausrutschen aus dem ausstülpungsparallelen Dichtungsbereich hindert.

4. Filteranordnung nach Anspruch 1 **dadurch gekennzeichnet, dass** eine als Schraubsicherung (15C, 15C') gebildete Verschließsicherung (17) des Adapterkragens (15) bezüglich des Filterhalters (12) vorgesehen ist.

5. Filteranordnung nach Anspruch 4, **dadurch gekennzeichnet dass** eine Umbördelung (13A) der Ausstülpung (13), gegen die eine Schraubmutter der Schraubsicherung anlegbar ist

6. Filteranordnung nach Anspruch 4, **dadurch gekennzeichnet, dass** die Schraubsicherung eine Überwurfmutter umfasst, die sich an der Rückseite des Filterhatters (12) abstützt.

7. Filteranordnung nach einem der Ansprüche 1 bis 6, **dadurch gekennzeichnet, dass** die halsförmige Ausstülpung (13) am Öffnungsrand des Filterhalters (12) als Kragen angeformt ist.

8. Filteranordnung nach einem der Ansprüche 1 bis 7, **gekennzeichnet durch** einen zusätilichen ausstülpungsparallelen Dichtungsschenkel (15D) des Adapterkragens (15), wobei der Dichtungsschenkel (15D) von der Rohgasseite her radial außen über die Ausstülpung (13) steckbar ist.

9. Filteranordnung nach Anspruch 8, **gekennzeichnet durch** eine von einem ausstülpungsparallelen Schenkel (15B) und einem ausstülpungsparallelen Dichtschenkel (15D) des Adapterkragens (15) gebildete Aufnahmerinne (15E) für die Ausstülpung (13) des Filterhalters (12).

10. Filteranordnung nach einem der Ansprüche 1 bis 9, **dadurch gekennzeichnet, dass** zwischen der Ausstülpung (13) des Filterhalters (12) und dem ausstülpungsparallelen Schenkel (15B) des Adapterkragens (15) bzw zwischen der Ausstülpung (13) des Filterhalters (12) und dem zusätilchen ausstüngsparallelen Dichtungsschenkel (15D) des Adapterkragens (15) ein Zwischenraum verbleibt, der von einem Teil der Dichtungsanordnung (16) überbrückt wird.

11. Filteranordnung nach einem der Ansprüche 1 bis 10, **gekennzeichnet durch** mindestens eine urnlaufend durchgehende Dichtlippe (16B') der Dichtanordnung (16) auf der der Ausstülpung (13) zugewandten Dichtungsseite.

12. Filteranordnung nach einem der Ansprüche 1 bis 10, **gekennzeichnet durch** mindestens eine umlaufend durchgehende Dichtlippe (16A') auf der dem Adapterkragen (15) zugewandten Dichtungsseite.

13. Filteranordnung nach einem der Ansprüche 1 bis 12, **gekennzeichnet durch** Haltemittel zum Halten der Dichtanordnung (16) an dem Adapterkragen (15) zum gemeinsamen Einschieben oder Überschieben des Adapterkragens samt der Dichtanordnung in oder über die Ausstülpung (13).

14. Filteranordnung nach einem der Ansprüche 1 bis 13, **gekennzeichnet durch** mindestens einen wulstartigen Vorsprung (16C) der Dichtanordnung (16) und damit korrespondierende Aussparung am Adapterkragen (15).

15. Filteranordnung nach einem der Ansprüche 1 bis 14, **gekennzeichnet durch** eine korrespondierende Vernutung und Verrippung (18A; 18B) zwischen plattenparallelen Schenkeln der Dichtungsanordnung und des Adapterkragens.

## Claims

1. Filter arrangement comprising at least one plate-shaped filter holder (12) provided with at least one neck-shaped protuberance (13) having an opening (11), said filter holder being provided for sealingly accommodating a filter element (14) which comprises a collar-shaped connecting element for each protuberance on the raw gas side of the filter holder,
a sealing arrangement (16) which comprises sealing elements (16A, 16B) which are parallel to both the filter holder and the protuberances and are used for at least partial joining between the protuberance (13) and the collar-shaped connecting element of the filter holder (12ⁱ),
for each filter element (14), an adaptor collar (15) is provided as a collar-shaped connecting element comprising at least one limb (15B) which is parallel to the protuberance (13) and is pluggable from the raw gas side radially inwardly into the protuberance (13), and at least one limb (15A) parallel to the plate of the filter holder (12), said limb (15A) extending radially beyond the limb (15B) parallel to the protuberance on the raw gas side, and
a closure securing device (17) of the adaptor collar (15) relative to the filter holder (12), configured as a snap lock device by means of which the filter element is prevented from slipping completely out of the sealing region parallel to the protuberance, said closure securing device (17) engaging at the limb (15B) of the adaptor collar (15) parallel to the protuberance and at the filter holder (12), at the side thereof opposing the filter element (14).

2. Filter arrangement according to claim 1, **characterised in that** the closure securing device (17) comprises a pivotable securing clip (17A).

3. Filter arrangement according to claim 2, **characterised in that**, with the securing clip (17A) unlocked, the closure securing device (17) prevents the adaptor collar (15) of the filter element from slipping completely out of the sealing region parallel to the protuberance.

4. Filter arrangement according to claim 1, **characterised in that** a closure securing device (17) of the adaptor collar (15) configured as a screw lock (15C, 15C') for the adaptor collar (15) in relation to the filter holder (12) is provided.

5. Filter arrangement according to claim 4, characterised in thatⁱⁱ a flange (13A) of the protuberance (13) can be laid against the nut of the screw lock.

6. Filter arrangement according to claim 4, **characterised in that** the screw lock comprises a union nut which is supported on the rear side of the filter holder (12).

7. Filter arrangement according to one of the claims 1 to 6, **characterised in that** the neck-shaped protuberance (13) is formed at the opening edge of the filter holder (12) as a collar.

8. Filter arrangement according to one of the claims 1 to 7, **characterised by** an additional sealing limb (15D) of the adaptor collar (15), the sealing limb (15D) being pluggable from the raw gas side radially outwardly over the protuberance (13).

9. Filter arrangement according to claim 8, **characterised by** a receptacle channel (15E) for the protuberance (13) of the filter holder (12), said receptacle channel (15E) being formed from a limb (15B) of the adaptor collar (15) parallel to the protuberance and a sealing limb (15D) of the adaptor collar (15) parallel to the protuberance.

10. Filter arrangement according to one of the claims 1 to 9, **characterised in that** an intermediate space which is bridged by part of the sealing arrangement (16) remains between the protuberance (13) of the filter holder (12) and the limb (15B) of the adaptor collar (15) parallel to the protuberance or between the protuberance (13) of the filter holder (12) and the additional sealing limb (15D) of the adaptor collar (15) parallel to the protuberance.

11. Filter arrangement according to one of the claims 1 to 10, **characterised by** at least one peripherally continuous sealing lip (16B') of the sealing arrangement (16) on the side of the seal facing the protuberance (13).

12. Filter arrangement according to one of the claims 1 to 10, **characterised by** at least one peripherally continuous sealing lip (16A') on the side of the seal facing the adaptor collar (15).

13. Filter arrangement according to one of the claims 1 to 12, **characterised by** holding means for holding the sealing arrangement (16) at the adaptor collar (15) for joint insertion or pushing of the adaptor collar together with the sealing arrangement into or over the protuberance (13).

14. Filter arrangement according to one of the claims 1 to 13, **characterised by** at least one bead-like projection (16C) of the sealing arrangement (16) and a recess at the adaptor collar (15) corresponding thereto.

15. Filter arrangement according to one of the claims 1 to 14, **characterised by** a corresponding grooving and ribbing (18A, 18B) between limbs of the sealing arrangement and of the adaptor collar parallel to the plate.

## Revendications

1. Dispositif de filtre comprenant au moins un dispositif de fixation à fermeture rapide,
- une excroissance en forme de col (13) muni d'un passage (11) pour recevoir de manière étanche un élément de filtre (14) comportant un élément de branchement en forme de col pour chaque excroissance du côté gaz non filtré du porte-filtre (12),
- un dispositif d'étanchéité (16) qui comprend également des éléments d'étanchéité (16A, 16B) aussi bien parallèles au porte-filtre que parallèles à l'excroissance en forme de col pour être insérés au moins partiellement entre l'excroissance (13) et l'élément de branchement en forme de col du porte-filtre (12),
- pour chaque élément de filtre (14) un col adaptateur (15) comme élément de branchement en forme de col avec au moins une branche (15B) parallèle à l'excroissance en forme de col (13) cette branche peut être insérée à partir du côté gaz non filtré radialement dans l'excroissance (13), et avec au moins une branche (15A) parallèle au plan du porte-filtre (12) qui déborde radialement de la branche (15B) parallèle à l'excroissance en forme de col du côté gaz non filtré, ainsi qu'
- un dispositif de fermeture (17) réalisé comme un dispositif de fixation à fermeture rapide du col adaptateur (15) par rapport au porte-filtre (12) qui empêche l'élément de filtre de glisser totalement hors de la zone d'étanchéité parallèle à l'excroissance en forme de col et qui vient en prise sur le porte-filtre par la branche (15B) parallèle à l'excroissance du col adaptateur (15) ainsi que par le côté du porte-filtre (12) en regard de l'élément de filtre (14).

2. Dispositif selon la revendication 1,
**caractérisé en ce que**
le dispositif de fixation à fermeture rapide (17) comporte un étrier de fixation pivotant (17A).

3. Dispositif selon la revendication 2,
**caractérisé en ce que**
le dispositif de fixation à fermeture rapide (17) dont l'étrier de fixation (17A) n'est pas verrouillé, empêche un total glissement vers l'extérieur du col adaptateur (15) de l'élément de filtre hors de la zone d'étanchéité parallèle à l'excroissance en forme de col.

4. Dispositif selon la revendication 1,
**caractérisé par**
un dispositif de fermeture (17) sous la forme d'une fixation vissée (15C, 15C') du col adaptateur (15) par rapport au porte-filtre (12).

5. Dispositif selon la revendication 4,
**caractérisé par**
un sertissage (13A) de l'excroissance en forme de col (13) contre lequel est appliqué l'écrou de la fixation vissée.

6. Dispositif selon la revendication 4,
**caractérisé en ce que**
la fixation vissée comprend un écrou chapeau qui s'appuie sur la face arrière du porte-filtre (12).

7. Dispositif selon l'une des revendications 1 à 6,
**caractérisé en ce que**
l'excroissance en forme de col (13) forme un col à la périphérie de l'ouverture du porte-filtre (12).

8. Dispositif selon l'une des revendications 1 à 7,
**caractérisé par**
une branche d'étanchéité (15D) supplémentaire du col adaptateur (15) parallèle à l'excroissance en forme de col la branche d'étanchéité (15D) s'emmanchant radialement par l'extérieur par-dessus l'excroissance (13) à partir du côté gaz non filtré.

9. Dispositif selon la revendication 8,
**caractérisé par**
une goulotte de réception (15E) pour l'excroissance en forme de col (13) du porte-filtre (12), goulotte de réception formée par une branche (15B) parallèle à l'excroissance et une branche d'étanchéité (15D) du collet adaptateur (15) parallèle à l'excroissance.

10. Dispositif selon l'une des revendications 1 à 9,
**caractérisé en ce qu'**
un espace intermédiaire qui subsiste entre l'excroissance (13) du porte-filtre (12) et la branche (15B) du col adaptateur (15) parallèle à l'excroissance respectivement entre l'excroissance (13) du porte-filtre (12) et la branche d'étanchéité (15D) du col adaptateur (15) supplémentaire, parallèle à l'excroissance, l'espace intermédiaire étant chevauché par une partie du dispositif d'étanchéité (16).

11. Dispositif selon l'une des revendications 1 à 10,
**caractérisé par**
au moins une lèvre d'étanchéité (16B'), continue, périphérique du dispositif d'étanchéité (16) sur le côté d'étanchéité tourné vers l'excroissance (13).

12. Dispositif selon l'une des revendications 1 à 10,
**caractérisé par**
au moins une lèvre d'étanchéité (16A'), continue, périphérique sur le côté d'étanchéité tourné vers le col adaptateur (15).

13. Dispositif selon l'une des revendications 1 à 12,
**caractérisé par**
des moyens de fixation pour tenir le dispositif d'étanchéité (16) sur le col adaptateur (15) pour être emmanché en commun dans ou sur le col adaptateur avec le dispositif d'étanchéité dans ou par-dessus l'excroissance (13).

14. Dispositif selon l'une des revendications 1 à 13,
**caractérisé par**
au moins un relief (16C) en forme de bourrelet du dispositif d'étanchéité (16) et un dégagement correspondant du col adaptateur (15).

15. Dispositif selon l'une des revendications 1 à 14,
**caractérisé par**
des nervures et des rainures (18A, 18B) correspondantes entre les branches parallèles planes du dispositif d'étanchéité et du col adaptateur.
